# EUROPEAN PATENT APPLICATION

(11) **EP 4 195 474 A1**
(43) Date of publication of application: **14.06.2023**
(21) Application number: 21213488.6
(22) Date of filing: 09.12.2021
(51) Int. Cl.: H02M 1/00, H02M 1/10, H02M 5/458, H02M 7/06, H02M 7/5387

(54) **POWER CONVERSION APPARATUS AND METHOD FOR CONNECTING POWER CONVERSION APPARATUS TO AC POWER SUPPLY**

(71) Applicant: Viessmann Climate Solutions SE, 35108 Allendorf (DE)
(72) Inventor: GRUBER, Artjom, 34270 Schauenburg (DE); BUSCH, Wolfgang, 34128 Kassel (DE); FASSHAUER, Heiko, 37235 Hessisch Lichtenau (DE)
(74) Representative: MERH-IP Matias Erny Reichl Hoffmann Patentanwälte PartG mbB

(57) **Abstract**

Power conversion apparatus for converting power supplied by an AC power supply and providing the converted power to a heat pump, comprising a three-phase rectifier, a DC-Link and an inverter, wherein: the three-phase rectifier is configured to receive the supplied power, and convert the received power to DC power; the DC-Link is configured to receive the converted DC power, and filter the received DC power; the inverter is configured to receive the filtered DC power, and convert the received DC power to AC power to be provided to the heat pump; and the power conversion apparatus is configured to be suitable for being connected to a three-phase AC power supply comprising three phase wires, and also suitable for being connected to a single-phase AC power supply comprising a phase wire and a neutral wire.

## Description

### Technical Field

The present application relates to the field of power conversion apparatuses, and in particular to the field of power conversion apparatuses for heat pumps.

### Background

Depending on the specific countries that heat pumps are to be applied, the heat pumps can be configured to be used with either a single-phase alternating current (AC) power supply or a three-phase AC power supply. The single-phase AC power supply can be of a voltage of 230V, and can comprise a phase wire and a neutral wire. The three-phase power supply can have a voltage of 400V, and can comprise three phase wires. Therefore, the structures of the respective heat pumps that are to be applied to the single-phase AC power supply and the three-phase AC power supply would in principle be different, since a heat pump applicable to a single-phase AC power supply cannot be directly applied to a three-phase AC power supply and vice versa. In most cases, a heat pump that is applicable to either one of a single-phase AC power supply and a three-phase power supply would at least have to be adapted in its configuration so as to be applicable to the other of the two.

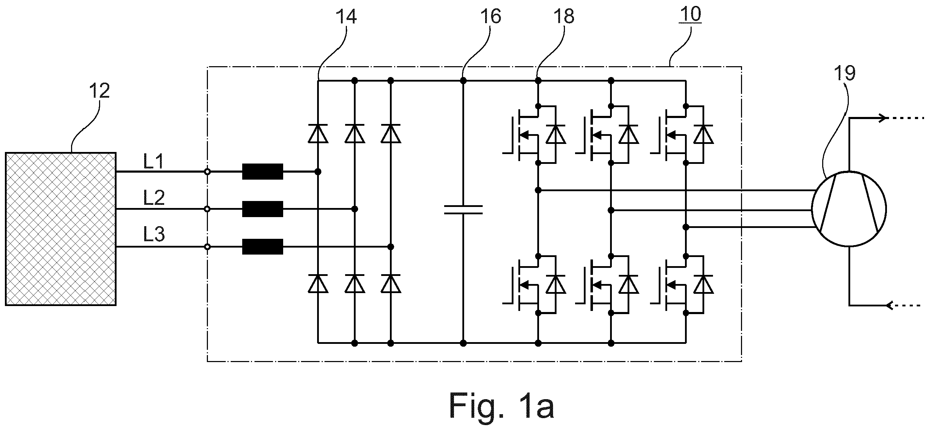

Fig. 1a shows a typical power conversion apparatus 10, or (power) converter 10, for a three-phase AC power supply. Therein, the converter 10 is connected to a three-phase AC power supply 12 which comprises three-phase wires L1, L2 and L3, such that the converted power is applied to a heat pump 19, or a compressor 19 comprised in the heat pump. The converter 10 comprises a three-phase rectifier 14 that is directly connected to the three-phase AC power supply 12 so as to receive the supplied AC voltage, or AC power, and to convert the received AC voltage to a DC voltage. The converter 10 further comprises a filter 16, or DC-Link 16, that is directly connected to the three-phase rectifier 14 so as to receive the converted DC voltage from the three-phase rectifier 14, and to provide filtering of the received DC voltage. Further, the converter 10 comprises a three-phase inverter 18 which is directly connected to the DC-Link 16 so as to receive the filtered DC voltage from the DC-Link 16, and to convert the received DC voltage to AC voltage. The converted AC voltage is then supplied from the three-phase inverter 18 to the heat pump 19. Therein, the connection of the converter 10 to the three-phase AC power supply 12 is carried out by connecting the three phases, or (phase) legs, or (phase) arms, or branches, or inductors, of the three-phase rectifier 14 to the three phase wires L1-L3 of the three-phase AC power supply 12, respectively.

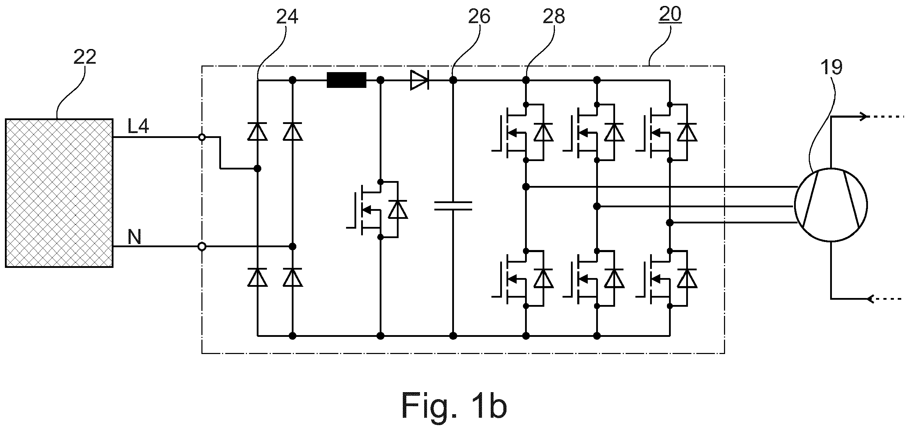

Fig. 1b shows a typical power conversion apparatus 20, or (power) converter 20, that is applicable to a single-phase AC power supply 22 which comprises a phase wire L4 and a neutral wire N. More specifically, the converter 20 comprises a single-phase rectifier 24 that is directly connected to the single-phase AC power supply 22 so as to receive the AC voltage supplied. Analogously to Fig. 1a, the converter 20 also comprises a filter 26, or DC-Link 26, which is directly connected between the single-phase rectifier 24 and a three-phase inverter 28. The conversion procedure is similar to that as described above in relation to Fig. 1a, with the difference that in Fig. 1b the single-phase rectifier 24 is connected to the single-phase AC power supply 22 by connecting the two branches, or (phase) arms, or (phase) legs (including a rectification leg and a neutral leg), of the single-phase rectifier 24 to the phase wire L4 and the neutral wire N of the single-phase AC power supply 22, respectively.

Therefore, the configuration provided in accordance with Fig. 1a can only be applied to a three-phase AC power supply, whereas the configuration provided in accordance with Fig. 1b can only be applied to a single-phase AC power supply. Such an incompatibility of the two configurations results in that at least two different converters, or power conversion apparatuses, would have to be provided for being respectively connected to a single-phase AC power supply and a three-phase AC power supply. This thus further leads to increased manufacturing cost of power conversion apparatuses for heat pumps, and in the meantime reduced usability of the power conversion apparatuses for both the single-phase AC power supply and the three-phase AC power supply, in particular in that those power conversion apparatuses cannot be used to their full capacity due to their incompatibility with either a single-phase AC power supply or a three-phase AC power supply.

Therefore, it is needed a universal power conversion apparatus, or converter, that can be connected to both a single-phase AC power supply and a three-phase AC power supply, in particular without further adjustment or adaptation of the structure thereof, wherein all of the components of the power conversion apparatus can be utilized to their full or optimal capacity, thus increasing the efficiency in manufacturing and applying the power conversion apparatus.

Document US 2020/0083727 A1 provides an apparatus for charging and discharging, which apparatus comprises an AC power terminal, a power conversion stage, a first switch set, a second switch set, a control module and a third switch set. Therein, the control module is configured to control the corresponding connections between the first to third switch sets, the AC power terminal, and the power conversion stage, such that the AC power terminal can be configured to receive both a three-phase AC input or a single-phase AC input. However, in this document the compatibility with both the three-phase AC input and the single-phase AC input is provided by means of the plurality of additional components including the first to third switch sets and the control module, which thus inevitably increases the manufacturing cost, as well as the complexity due to using the control module to control the respective connections in the apparatus.

Document EP 3 648 322 A1 provides an on-board charger (OBC) which can be used for extracting a total power which is equal to a maximum power extracted from a three-phase electrical grid from an AC electrical grid. Therein, the AC electrical grid can be a three-phase, two-phase, or single-phase electrical grid. The OBC comprises a power factor corrector (PFC), as well as three switches, such that, when the PFC is connected to a three-phase electrical grid, the three switches are actuated in an open state, and when the PFC is connected to a single-phase electrical grid, the three switches are actuated in a closed state. In this document, analogously, in order to achieve the compatibility with both a single-phase electrical grid and a three-phase electrical grid, at least three additional switches would have to be provided, which thus also leads to increased manufacturing cost and reduced efficiency in applying the OBC.

Therefore, it is needed a power conversion apparatus which can be used to its full, or at least optimal, capacity, and which is cost-effective in that fewer components are needed in the apparatus for achieving compatibility with both a single-phase AC power supply and a three-phase AC power supply. Further, there is also needed a method for connecting such a power conversion apparatus, or converter, to both a single-phase AC power supply and a three-phase AC power supply.

### Summary of the Invention

It is an object of the present application to provide a power conversion apparatus for converting power supplied by an AC power supply and further for providing the converted power to in particular a heat pump, which power conversion apparatus is applicable to both a single-phase AC power supply and a three-phase AC power supply with full utilization, or at least increased utilization, of the components comprised in the power conversion apparatus, as well as with reduced cost and increased efficiency in manufacturing and applying the power conversion apparatus. Such a power conversion apparatus is provided in accordance with independent claim 1, whereas preferred embodiments thereof are described in accordance with claims 2-7.

It is also an object of the present application to provide a method for connecting such a power conversion apparatus to both a single-phase AC power supply and a three-phase AC power supply so as to achieve full utilization, or at least increased utilization, in connecting the power conversion apparatus to the above two different AC power supplies, with increased efficiency. Such a method is described in accordance with independent claim 8, whereas preferred embodiments thereof are described in accordance with claims 9-14.

In accordance with the present application, there is provided a power conversion apparatus for converting power supplied by an AC power supply and providing the converted power to a heat pump. The power conversion apparatus comprises a three-phase rectifier, a DC-Link and an inverter, wherein: the three-phase rectifier is configured to receive the supplied power, i.e., the supplied AC power or AC voltage, and convert the received power to DC power; the DC-Link is configured to receive the converted DC power, and filter the received DC power; the inverter is configured to receive the filtered DC power, and convert the received DC power to AC power to be provided to the heat pump; and the power conversion apparatus is configured to be suitable for being connected to a three-phase AC power supply comprising three phase wires, and also suitable for being connected to a single-phase AC power supply comprising a phase wire and a neutral wire.

Therein, the three-phase rectifier is configured to receive, at its input, the supplied AC voltage, or power, from the AC power supply, and to transform, or convert, the received AC voltage to a corresponding DC voltage at its output. Preferably, the three-phase rectifier comprises three (phase) arms, or branches, or (phase) legs, or inductors, so as to correspond to the three phase wires of the three-phase AC power supply. Therefore, with such a structure, the compatibility to a three-phase AC power supply is achieved such that a three-phase AC voltage can already be converted by the power conversion apparatus and then be provided to a load, in particular to a heat pump.

Further, the DC-Link is arranged between the three-phase rectifier and the inverter, and preferably, is configured in parallel with the three-phase rectifier and inverter. More specifically, the DC-Link is configured to receive, at its input, or at the output of the three-phase rectifier, the rectified, or converted, DC voltage (or power), and preferably to smoothen any ripples in the pulses in the converted DC voltage, so as to provide filtered DC voltage at the output of the DC-Link. The DC-Link in accordance with the present application is preferably a (filter) capacitor, wherein a higher capacitance of the DC-Link would in principle result in less ripple in the filtered DC voltage.

Further, the inverter, or power inverter, is configured to convert the filtered DC voltage to an AC voltage to be provided to the load, or the heat pump. More specifically, the inverter is configured to receive, at its input, or at the output of the DC-Link, the filtered DC voltage. Preferably, the inverter in accordance with the present application is a three-phase inverter.

Further, the compatibility with a single-phase AC power supply is also provided by the power conversion apparatus in accordance with the present application at least due to that the three-phase rectifier as mentioned in the above comprises three (phase) arms, or branches, or (phase) legs, or inductors, that can also be used to directly connect to the phase wire and the neutral wire of the single-phase AC power supply.

Therefore, in accordance with the present application, with the configuration of a three-phase rectifier, compatibility to both a single-phase AC power supply and a three-phase AC power supply is provided, without the need to add a further component to the power conversion apparatus, thus leading to reduced manufacturing cost and improved efficiency in utilization of the components in the power conversion apparatus.

Preferably, the three-phase rectifier comprises three (phase) arms, or (phase) legs, or branches, or inductors, wherein the three arms of the three-phase rectifier are configured to connect to the three phase wires of the three-phase AC power supply, respectively.

Therein, more preferably, the three-phase rectifier is configured in a bridge configuration, and comprises more preferably three arms, or bridge arms, each arm thereof for being connected to one of the three phase wires, or the three phases of a three-phase AC power supply, respectively.

Further, the three arms of the three-phase rectifier are preferably configured in parallel with each other, each arm comprising preferably two semiconductor devices connected in series. Therein, the semiconductor devices can comprise diodes, MOSFETs, IGBTs etc.

In addition, by an "arm" of the three-phase rectifier it is preferably referred to a branch, or (phase) leg, or a inductor, provided in the bridge configuration, which arm is connected between a positive end (current supply end) and a negative end (ground end, or current return end) of the circuit. Therein, more specifically, each of the phase wires of the three-phase AC power supply is connected to an arm of the three-phase rectifier, and more preferably by connecting each of the phase wires of the three-phase AC power supply to a node provided between two semiconductor devices configured on one corresponding arm of the three-phase rectifier. Thus, preferably, a six-pulse bridge (B6 Bridge) is provided as the three-phase rectifier in accordance with the present application.

Therefore, the power conversion apparatus in accordance with the present application is configured to connect to a three-phase AC power supply, with full utilization of all of the components comprised in the power conversion apparatus, and without any additional components to the apparatus, as well as with easy connection of the power conversion apparatus to the three-phase AC power supply.

Preferably, a first arm of three arms of the three-phase rectifier is configured to connect to the phase wire of the single-phase AC power supply, and a second arm of the three arms of the three-phase rectifier is configured to connect to the neutral wire of the single-phase AC power supply.

Therein, two arms of the three-phase rectifier are used to connect to the phase wire and the neutral wire of the single-phase AC power supply, respectively. More specifically, the phase wire of the single-phase AC power supply is connected to any one of the three arms of the three-phase rectifier, and the neutral wire of the single-phase AC power supply is connected to another one of the three arms of the three-phase rectifier. Preferably, the connection is carried out by connecting the phase wire and the neutral wire, respectively, to nodes provided between two semiconductor devices configured on corresponding arms of the three-phase rectifier. In addition, there is preferably provided a filter on each connection between the wires of the single-phase power supply and the corresponding arms of the three-phase rectifier.

Therefore, according to the present application any two of the three arms of the three-phase rectifier can be utilized to be connected to the phase wire and the neutral wire of the single-phase AC power supply, such that utilization of at least the two arms of the three-phase rectifier is achieved, without any adaptation or adjustment necessary for achieving that compatibility. Moreover, no additional components are needed in the power conversion apparatus to achieve the compatibility with both the three-phase AC power supply and the single-phase AC power supply, thus resulting in reduced cost and improved efficiency in manufacturing and applying the power conversion apparatus in accordance with the present application.

Preferably, all three arms of the three-phase rectifier are configured to connect to the phase wire of the single-phase AC power supply, wherein the DC-Link comprises two capacitors connected in series, and a node between the two capacitors is configured to connect to the neutral wire of the single-phase AC power supply.

Therein, the DC-Link comprises more specifically two capacitors that are connected in series, such that the neutral wire of the single-phase AC power supply is configured to connect to a node between the two capacitors, whereas all of the three arms of the three-phase rectifier are configured to connect to the phase wire of the single-phase AC power supply.

Therefore, in accordance with the present application there is provided at least an additional or alternative way of connecting the three-phase rectifier to a single-phase AC power supply, in that all of the three arms of the three-phase rectifier can be connected to the phase wire of the single-phase AC power supply. This requires no adaptation of the power conversion apparatus which is already applicable to the three-phase AC power supply, in that the configuration of the DC-Link can be carried out by providing two capacitors connected in series in both cases, wherein all of the components of the three-phase rectifier, i.e., the semiconductor devices thereof, can be used to their full capacity in their being connected to both the single-phase AC power supply and the three-phase AC power supply.

Preferably, for each wire of the three-phase AC power supply and/or the single-phase AC power supply, an inductor is configured in said each wire.

Therein, as described in the above, the three phase wires of the three-phase AC power supply are respectively connected to the three arms of the three-phase rectifier in accordance with the present application, and the connection to a single-phase AC power supply can be implemented either by connecting the phase wire and the neutral wire respectively to two of the three arms of the three-phase rectifier, or by connecting all three arms of the three-phase rectifier to the phase wire and by connecting the neutral wire to a node provided between two capacitors comprised in the DC-Link. Thus, each wire of the three-phase AC power supply, and similarly each wire of the single-phase AC power supply, are connected to one arm of the three-phase rectifier or a node provided between two capacitors comprised in the DC-Link. Therein, in particular, on each connection between the wires of the power supplies and the three-phase rectifier, there is preferably provided an inductor between the power supply and the three-phase rectifier, so as to reduce ripples present in the current provided from the power supply to the input of the three-phase rectifier. Thus, stability of the circuit is improved.

Preferably, the power conversion apparatus further comprises a single-phase rectifier configured to receive power supplied by the single-phase AC power supply, and all three arms of the three-phase rectifier are configured to connect to output of the single-phase rectifier.

Therein, the single-phase rectifier has preferably a similar configuration as to that of the three-phase rectifier, with the difference that the single-phase rectifier comprises preferably two (phase) arms, or (phase) legs, or branches, or inductors, connected in parallel, each comprising preferably two semiconductor devices connected in series. Therein, preferably, the single-phase rectifier is configured to receive, at its input, from the single-phase AC power supply the supplied AC voltage, to convert the received AC voltage, and to provide, at its output, the converted DC voltage to the three-phase rectifier. Thus, the current provided at the output of the single-phase rectifier is configured, in accordance with the present application, to flow into the three-phase rectifier. In other words, the converted DC voltage at the output of the single-phase rectifier is provided to the three-phase rectifier by connecting the current supply end, i.e., the output, of the single-phase rectifier to three nodes provided on the three arms of the three-phase rectifier, each node being provided between two semiconductor devices configured on the corresponding arm of the three-phase rectifier. Preferably, the current return end of the single-phase rectifier is connected to the current return end of the three-phase rectifier. Preferably, by the "current supply end" it is referred to one end of a rectifier, where the current flows out and is supplied to the next stage in the circuit, whereas by the "current return end" it is referred to the end other than the current supply end of the rectifier, where the current returns to the rectifier. Therefore, the three-phase rectifier receives, at its input, the converted DC voltage provided by the single-phase rectifier.

Therefore, in accordance with the present application the compatibility to be connected to a three-phase AC power supply is provided still by the three-phase rectifier as described in the above, whereas the connection to a single-phase AC power supply is provided by a single-phase rectifier provided between the single-phase AC power supply and the three-phase rectifier. Therefore, in order to connect to the single-phase AC power supply, the single-phase rectifier, being used as a front end, is applied by preferably connecting the two arms respectively to the phase wire and the neutral wire of the single-phase AC power supply. The thus converted DC voltage is then supplied to the three-phase rectifier and further to the DC-Link and the heat pump in that at the output of the single-phase rectifier connection to all three arms of the three-phase rectifier is provided, with the current return ends of the single-phase rectifier and the three-phase rectifier being connected. Therefore, in both cases, the components in the power conversion apparatus are used to their full capacity, with merely the need of the single-phase rectifier which is still used to its full capacity when being connected to the three-phase rectifier. The connection thus needed is also with reduced complexity.

Preferably, for each connection between the respective arm of the three-phase rectifier and the output of the single-phase rectifier, an inductor is configured in said each connection.

Therein, on each connection between the output, or the current supply end, of the single-phase rectifier and the corresponding arm of the three-phase rectifier, an inductor is also provided, so as to avoid ripples in the current flowing to the three-phase rectifier. Thereby, stability of the circuit is improved.

Further, in accordance with the present application there is provided a method for connecting a power conversion apparatus as described above to an AC power supply, so as to convert power supplied by the AC power supply and provide the converted power to a heat pump, wherein the AC power supply can be either a three-phase AC power supply comprising three phase wires, or a single-phase AC power supply comprising a phase wire and a neutral wire. The method comprises: for the three-phase AC power supply, connecting the power conversion apparatus to the three-phase AC power supply by connecting arms of the three-phase rectifier to the three phase wires of the three-phase AC power supply; and for the single-phase AC power supply, connecting the power conversion apparatus to the single-phase AC power supply also by connecting arms of the three-phase rectifier to the phase wire and the neutral wire of the single-phase AC power supply.

Thus, the method in accordance with the present application provides that the connection of the power conversion apparatus to either the three-phase AC power supply or the single-phase power supply is implemented by connecting the arms of the three-phase rectifier to the respective wires of the three-phase AC power supply or the single-phase AC power supply. Thus, no additional components are needed in achieving the connection as described above, leading to reduced complexity as well as improved efficiency in the connection.

Preferably, the method further comprises connecting three arms of the three-phase rectifier to the three phase wires of the three-phase AC power supply, respectively.

Therefore, in accordance with the present application compatibility with the three-phase AC power supply is more specifically achieved by connecting the three arms of the three-phase rectifier to respectively the three phase wires of the three-phase AC power supply.

Preferably, the method further comprises connecting a first arm of the three arms of the three-phase rectifier to the phase wire of the single-phase AC power supply, and connecting a second arm of the three arms of the three-phase rectifier to the neutral wire of the single-phase AC power supply.

Therefore, in accordance with the present application compatibility with the single-phase AC power supply is achieved by connecting (any) two arms of the three arms of the three-phase rectifier, respectively, to the phase wire and the neutral wire of the single-phase AC power supply. This requires no adaptation of the circuit of the power conversion apparatus which is already suitable for being connected to the three-phase AC power supply, hence resulting in easy and flexible connection.

Preferably, the method further comprises: connecting all three arms of the three-phase rectifier to the phase wire of the single-phase AC power supply; providing two capacitors connected in series in the DC-Link; and connecting a node between the two capacitors to the neutral wire of the single-phase AC power supply.

The method in accordance with the present application is of reduced complexity in that it is only necessary to connect the arms of the three-phase rectifier to the respective phase wires of the single-phase or the three-phase AC power supply, and additionally, to connect the neutral wire of the single-phase AC power supply to a node provided between the two capacitors comprised in the DC-Link. Providing two capacitors in the DC-Link can be implemented easily with all the cases involving both AC power supplies.

Preferably, the method further comprises, for each wire of the three-phase AC power supply and/or the single-phase AC power supply, providing an inductor in said each wire.

As described in the above, the method in accordance with the present application comprises providing an inductor so as to reduce ripples in the current and to increase stability of the circuit.

Preferably, the method further comprises providing a single-phase rectifier for receiving power supplied by the single-phase AC power supply, and connecting all three arms of the three-phase rectifier to output of the single-phase rectifier.

Therein, a single-phase rectifier is provided for receiving the AC voltage that is supplied by the single-phase AC power supply. This is preferably achieved by connecting the phase wire and the neutral wire of the single-phase AC power supply respectively to the two arms comprised in the single-phase rectifier and, more preferably at respective nodes provided between two semiconductor devices on the corresponding arms of the single-phase rectifier. Further, the method preferably comprises connecting a current supply end at the output of the single-phase rectifier to all of the three arms of the three-phase rectifier, and more preferably, by connecting the current supply end of the single-phase rectifier to nodes provided between two semiconductor devices on corresponding arms comprised in the three-phase rectifier. Preferably, the method also comprises connecting the current return end of the single-phase rectifier to the current return end of the three-phase rectifier. Therefore, the method comprises providing the single-phase rectifier in between the single-phase power supply and the three-phase rectifier.

Thus, in accordance with the present application, by providing a single-phase rectifier between the single-phase AC power supply and the three-phase rectifier, and further to that, by connecting the output of the single-phase rectifier to the three arms of the three-phase rectifier and connecting the current return ends of the single-phase rectifier and the three-phase rectifier, compatibility with the single-phase AC power supply is achieved with full utilization of the single-phase rectifier as well as the three-phase rectifier, with low complexity in the connection as described in the above.

Preferably, the method further comprises, for each connection between the respective arm of the three-phase rectifier and the output of the sing-phase rectifier, providing an inductor in said each connection.

Therein, an inductor is preferably provided between the output of the single-phase rectifier and a corresponding arm comprised in the three-phase rectifier so as to reduce ripples present in the current provided to the three-phase rectifier and to increase stability of the circuit.

### Brief Description of the Drawings

- Fig. 1a: shows an example of a typical converter (or power conversion apparatus) for connecting to a three-phase AC power supply only;
- Fig. 1b: shows an example of a typical converter (or power conversion apparatus) for connecting to a single-phase AC power supply only;
- Fig. 2a: shows a power conversion apparatus in accordance with the present application which can be connected to both a three-phase AC power supply and a single-phase AC power supply;
- Fig. 2b: shows a connection between a three-phase AC power supply and a power conversion apparatus in accordance with the present application;
- Fig. 2c: shows a connection between a single-phase AC power supply and a power conversion apparatus in accordance with the present application;
- Fig. 2d: shows a connection between a single-phase power supply and a power conversion apparatus in accordance with the present application;
- Fig. 3: shows connections between a single-phase AC power supply and a power conversion apparatus in accordance with the present application, as well as between a three-phase AC power supply and the power conversion apparatus in accordance with the present application; and
- Fig. 4: shows a method in accordance with present application for connecting a power conversion apparatus to both a three-phase AC power supply and a single-phase AC power supply.

### Detailed Description of the Drawings

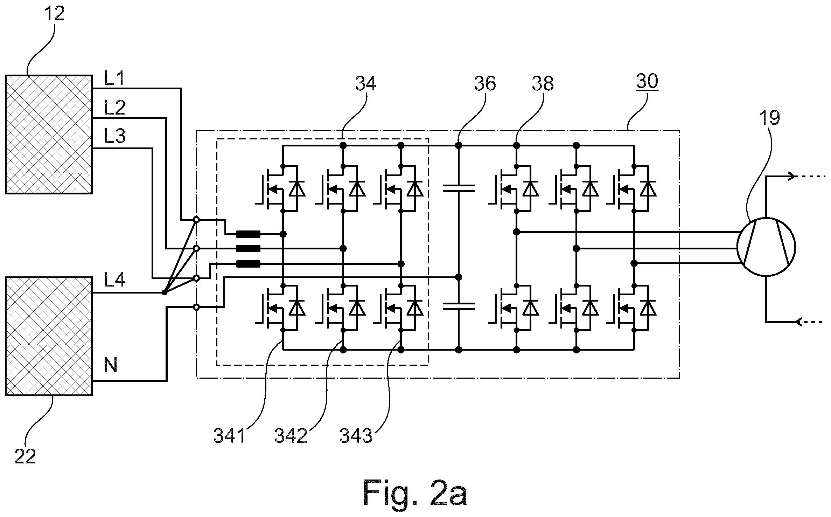

Fig. 2a shows the compatibility of a power conversion apparatus in accordance with the present application with both a single-phase AC power supply and a three-phase AC power supply.

In Fig. 2a, a power conversion apparatus 30 is provided, which is capable of being connected to both a three-phase AC power supply 12 comprising three phase wires L1-L3 and a single-phase AC power supply 22 comprising a phase wire L4 and a neutral wire N. The power conversion apparatus 30 comprises a three-phase rectifier 34, a DC-Link 36, and an inverter 38, the inverter 38 being preferably a three-phase inverter, which are connected in parallel with each other.

The three-phase rectifier 34 is configured to connect to the AC power supply 12 or 22 so as to receive the supplied AC power, or voltage, and to convert the received AC power, or voltage, to DC power (or voltage). Preferably, the three-phase rectifier 34 is provided in a bridge configuration comprising more specifically three bridge arms 341, 342 and 343, or phase arms, or arms, or inductors, or (phase) legs, or branches, connected in parallel with each other, with each arm being provided with two semiconductor devices connected in series. It is noted that the configuration of a bridge rectifier belongs to the knowledge of the person skilled in the art, and hence, is not provided with the greatest details here. Preferably, the three-phase rectifier 34 is provided as a B6 bridge, and the connection to the AC power supply is achieved by connecting one or more of the three bridge arms of the three-phase rectifier 34 to respectively the phase wires and the neutral wire of the corresponding AC power supply. More preferably, such a connection is achieved by connecting a wire of the power supply to a corresponding node or point provided on a corresponding arm and between two semiconductor devices provided on this arm. Therein, preferably the semiconductor devices comprise diodes, MOSFETs, IGBTs etc. Further, it is preferred that on a connection between a respective wire of the AC power supply and the node on the corresponding arm of the three-phase rectifier 34, an inductor is configured on that connection in order to reduce ripples in the current provided to the three-phase rectifier. In Fig. 2a the inductors are shown as being comprised in the three-phase rectifier 34. Of course the inductors in accordance with the present application can also be separate from the three-phase rectifier 34, and hence are comprised in the power conversion apparatus 30, without being an integral part of the three-phase rectifier 34.

More specifically, the compatibility of the power conversion apparatus 30 with the single-phase AC power supply 22 and the three-phase AC power supply 12 is achieved in the following manner. On each of the three arms 341-343 of the three-phase rectifier 34, a node is provided between the two semiconductor devices on that each arm, so as to connect respectively to the three phase wires L1-L3 of the three-phase AC power supply 12. With this same structure of the power conversion apparatus 30, the connection to the single-phase AC power supply 22 is achieved in that all of the three bridge arms 341-343 are connected to the phase wire L4 of the single-phase AC power supply 22, whereas the neutral wire N of the single-phase AC power supply 22 is connected to a node configured between the two capacitors comprised in the DC-Link 36.

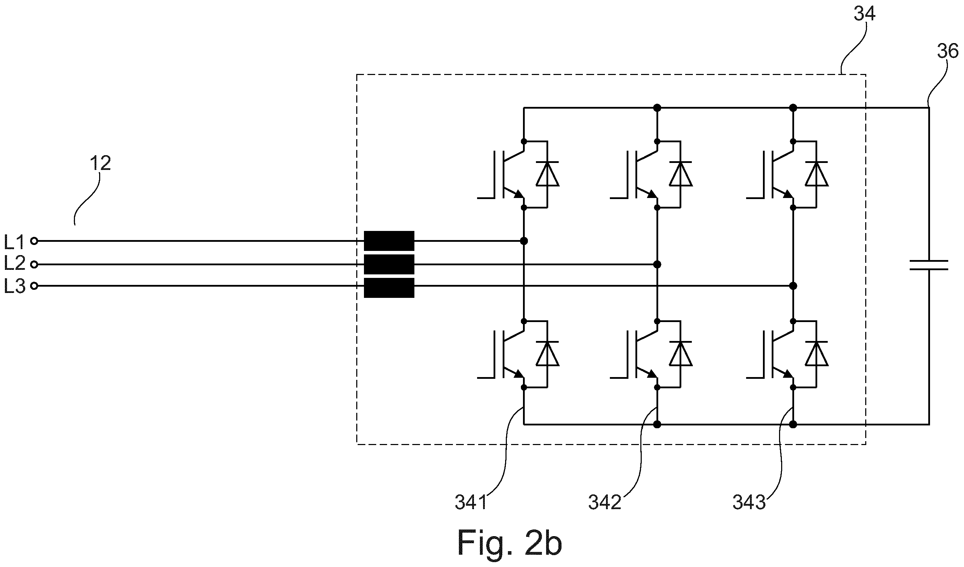

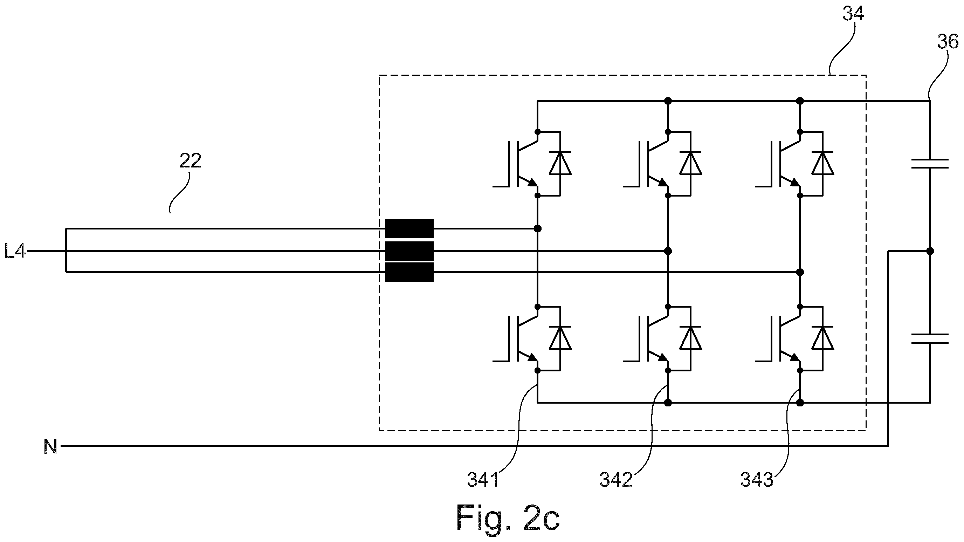

In particular, the connection between the three-phase AC power supply 12 and the three-phase rectifier 34 in accordance with the present application is also illustrated separately in Fig. 2b, whereas the connection between the single-phase AC power supply 22 and the three-phase rectifier 34 in accordance with the present application is illustrated separately in Fig. 2c. It is noted that in Fig. 2b, the DC-Link 36 is shown as comprising one capacitor only, but can of course also comprise two capacitors connected in series as is the case with Fig. 2a.

Further, the DC-Link 36 in Fig. 2a comprises two capacitors connected in series, such that a node between the two capacitors is connected to a neutral wire N of the single-phase AC power supply 22. The DC-Link 36 receives at its input, or at the output of the three-phase rectifier 34, the converted DC voltage or DC power so as to further smoothen out any ripples in the converted current.

Further, the three-phase inverter 38 in Fig. 2a is configured to receive at its input, or at the output of the DC-Link 36, the filtered DC voltage and to convert the received DC voltage to AC voltage to be provided to the load, preferably the heat pump 19. The structure of the three-phase inverter 38 is similar to that of the three-phase rectifier 34. Thus, the three-phase inverter 38 is preferably also of a B6 bridge configuration as is similar to that of the three-phase rectifier 34, such that, in order to provide the heat pump 19 with an AC power, each bridge arm or branch of the three-phase inverter 38 is connected to a corresponding phase of the heat pump 19, which is carried out in a similar manner as is described in the above in relation to the three-phase rectifier 34.

Therefore, in accordance with the present application, there is no need to adapt the configuration or the structure of the power conversion apparatus 30 so as to connect to both the single-phase AC power supply 22 and the three-phase AC power supply 12. There is also no need according to the present application to provide any further additional components to the power conversion apparatus so as to be able to connect to the single-phase AC power supply 22 and the three-phase AC power supply 12. Therefore, the manufacturing cost is reduced, since merely one kind of power conversion apparatus needs to be manufactured, which can then be applied to both kinds of AC power supplies. Further, the connection of the three-phase AC power supply 12, as well as the single-phase AC power supply 22 to the power conversion apparatus 30 in accordance with the present application is also less complex since it is only necessary to connect the respective wires of the corresponding AC power supply to one or more of the bridge arms of the three-phase rectifier 34 and additionally to the DC-Link 36 in the case of the single-phase AC power supply.

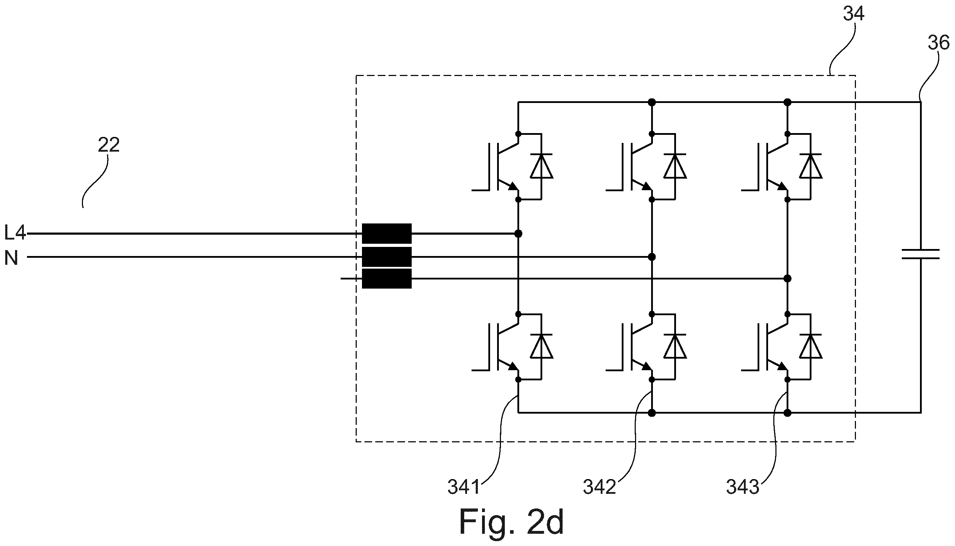

Fig. 2d shows a similar three-phase rectifier 34 as the three-phase rectifier 34 provided in Figs. 2a-2c. The difference between Fig. 2d and Figs. 2a-2c lies in the manner of connection between the single-phase AC power supply 22 and the three-phase rectifier 34. In accordance with Fig. 2d, the phase wire L4 of the single-phase AC power supply 22 is connected to the bridge arm 341 of the three-phase rectifier 34, and the neutral wire N is connected to the bridge arm 342 of the three-phase rectifier 34. As a result, the bridge arm 343 comprised in the three-phase rectifier 34 is left open with no connections. Of course, the phase wire L4 and the neural wire N can connect respectively to any two of the three arms 341-343 of the three-phase rectifier 34. The DC-Link 36 is the same or similar to that provided in Figs. 2a-2c. Thus, in Fig. 2d the DC-Link 36, although shown as comprising a capacitor only, can of course also comprise two capacitors connected in series as is the case with Fig. 2a.

In accordance with Fig. 2d the structure of the power conversion apparatus 34 for connection to the single-phase AC power supply 22 is unchanged in comparison to that provided in Figs. 2a-2b for connection to the three-phase AC power supply 12. Therefore, with no adjustment or adaptation to the structure of the power conversion apparatus 30, the connection to both the single-phase AC power supply 22 and the three-phase AC power supply 12 can be achieved in two different ways, namely one way as illustrated in Figs. 2a-2c and the other way as illustrated in Fig. 2d. In both cases, the compatibility with the two kinds of power supplies are ensured, without the need to adapt the structure of the power conversion apparatus and with reduced complexity. As a result, the efficiency in manufacturing and applying the power conversion apparatus in accordance with the present application is increased.

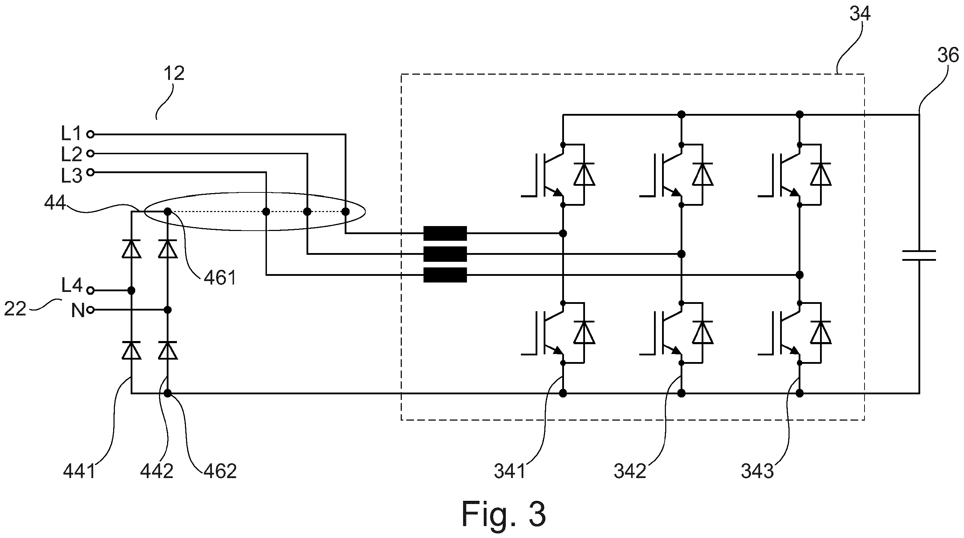

Fig. 3 shows the connections between the three-phase AC power supply 12 and the single-phase AC power supply 22 by using a single-phase rectifier 44. It is noted that the power conversion apparatus 30 is not shown in full in Fig. 3 for simplicity purposes, wherein the structure of the not shown power conversion apparatus 30 is the same as that provided in accordance with Figs. 2a-2d.

In accordance with Fig. 3 the power conversion apparatus 30 further comprises a single-phase rectifier 44 that is connected between the single-phase AC power supply 22 and the three-phase rectifier 34. Therefore, in accordance with the present application, in the case of connectingto a single-phase AC power supply 22, the single-phase rectifier 44 is applied in that the two bridge arms 441 and 442 comprised in the single-phase rectifier 44 are respectively connected to the phase wire L4 and the neutral wire N of the single-phase AC power supply 22. Therein, the structure of the single-phase rectifier 44 is similar to that of the three-phase rectifier 34. On each arm of the single-phase rectifier 44, two semiconductor devices including for instance diodes, MOSFETs and IGBTs are connected in series. Thus, the connection to the phase wire L4 and the neutral wire N is also provided by connecting respectively to nodes provided on corresponding arms of the single-phase rectifier 44, which nodes are respectively provided between two semiconductor devices.

As illustrated in Fig. 3, the current supply end 461, namely the end of the single-phase rectifier 44 from which the current is flowing out to the next stage of the circuit, namely to the three-phase rectifier 34, is connected to all of the three arms 341-343 of the three-phase rectifier 34. More specifically, this connection is achieved by connecting the current supply end 461 of the single-phase rectifier 22 to the respective nodes provided on the corresponding arms of the three-phase rectifier 34, which nodes, as described above, are provided between the semiconductor devices configured on each of the three arms. Preferably, on each connection between the current supply end 461 and the node provided on the corresponding arm of the three-phase rectifier 34, an inductor is provided for reducing ripples. Further, the current return end 462 of the single-phase rectifier 44, namely the end from which the current is flowing back from the three-phase rectifier 34 to the single-phase rectifier 44, is connected to the current return end of the three-phase rectifier 34.

In accordance with Fig. 3, the connection between the three-phase AC power supply 12 and the power conversion apparatus 30 is carried out in the manner that is similar to that as described in the above in relation to Figs. 2a and 2b. Therefore, there exist between the phase wires L1-L3 of the three-phase AC power supply 12 and the three bridge arms 341-343 of the three-phase rectifier 34 three corresponding connections, such that with these three connections, it is also possible to connect, in the case of connecting to a single-phase AC power supply 22, directly the current supply end 461 at the output of the single-phase rectifier 44 to the three connections. Thus, no adaptation to the circuit of the power conversion apparatus 30 is necessary. The single-phase rectifier 44 in accordance with the present application can be configured either as a part of the power conversion apparatus 30, such that the compatibility to the two kinds of AC power supplies is achieved by directly connecting the three-phase AC power supply 12 to the three respective arms of the three-phase rectifier 34, and in the case of the single-phase AC power supply, by directly connecting the phase wire and the neutral wire thereof to the two arms of the single-phase rectifier 44 and further, by connecting the output or the current supply end 461 of the single-phase rectifier to the three respective arms of the three-phase rectifier. Of course, the single-phase rectifier 44 can also be provided as a separate part to be added to the power conversion apparatus 30 as provided in accordance with Figs. 2a-2d. In both cases, the components are used to their full capacity with reduced complexity. In particular, it is only necessary to manufacture one kind of power conversion apparatus (including or not including the single-phase rectifier 44), such that at the operation stage, the connection to the two kinds of power supplies can be easily implemented.

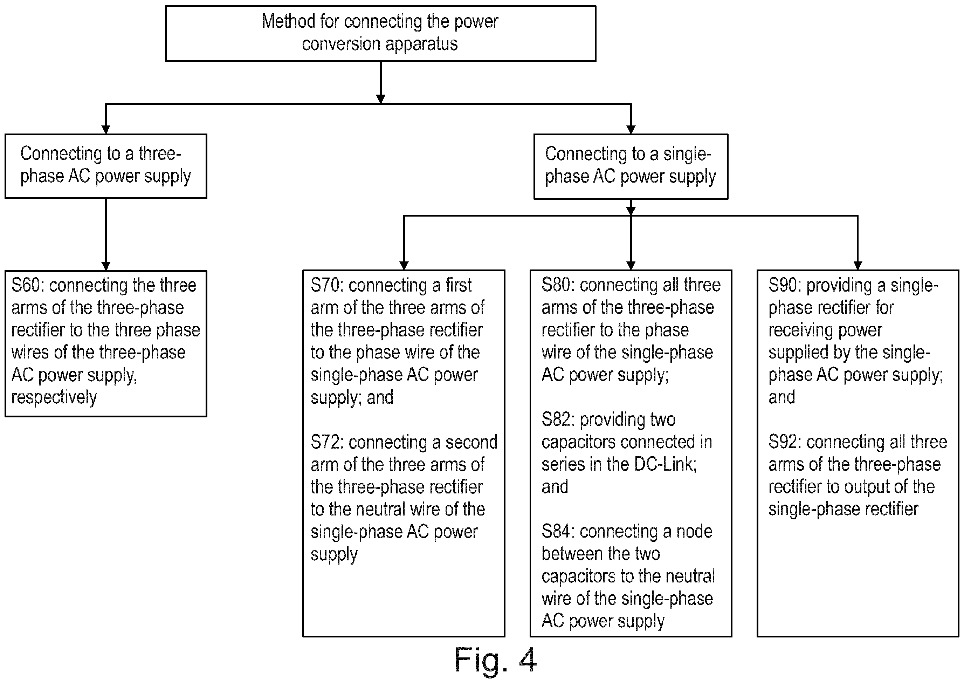

Fig. 4 shows a method in accordance with the present application for connecting a power conversion apparatus as described above to both a three-phase AC power supply comprising three phase wires and a single-phase AC power supply comprising a phase wire and a neutral wire. As illustrated in Fig. 4, the connection of the power conversion apparatus to the three-phase AC power supply is implemented by connecting arms of the three-phase rectifier to the three phase wires of the three-phase AC power supply, and the connection to the single-phase AC power supply is implemented also by connecting the arms of the three-phase rectifier to the phase wire and the neutral wire of the single-phase AC power supply.

More specifically, according to Fig. 4, in the case of connecting the power conversion apparatus to the three-phase AC power supply, the method comprises a step S60: connecting the three arms of the three-phase rectifier, respectively, to the three phase wires of the three-phase AC power supply. Preferably, this step corresponds to the structure shown in Figs. 2a and 2b.

Further, in the case of connecting to a single-phase AC power supply, there are provided three preferred embodiments or manners in accordance with the present application. All three embodiments are compatible with the above described structures in accordance with Figs. 2a-2d.

In accordance with a first manner of carrying out the connection to a single-phase AC power supply, the method comprises:
Step S70: connecting a first arm of the three arms of the three-phase rectifier to the phase wire of the single-phase AC power supply, and
Step S72: connecting a second arm of the three arms of the three-phase rectifier to the neutral wire of the single-phase AC power supply.

Preferably, this manner of connection corresponds to the structure shown in Fig. 2d. The order of carrying out steps S70 and S72 is not limited. The selection of the two arms out of the three arms of the three-phase rectifier is not limited, as long as the first arm and the second arm are different from each other. Preferably, the connection between the arms of the three-phase rectifier and the respective wires of the single-phase AC power supply is carried out by connecting the wires of the AC power supply respectively to nodes provided on corresponding arms of the three-phase rectifier, which nodes are respectively configured between two semiconductor devices provided on the corresponding arms.

In accordance with a second manner of carrying out the connection to the single-phase AC power supply, the method comprises:
Step S80: connecting the phase wire of the single-phase AC power supply to all of the three arms of the three-phase rectifier,
Step S82: providing two capacitors connected in series in the DC-Link, and
Step S84: connecting the neutral wire of the single-phase AC power supply to a node provided between the two capacitors.

Preferably, this manner of connection corresponds to the structure shown in Figs. 2a and 2c. In this case, analogously there is no need of adaptation of the structure of the power conversion apparatus since the DC-Link can be easily provided as comprising two capacitors connected in series. In particular, the structure of the three-phase rectifier remains unchanged as is for the connection to the three-phase AC power supply, such that it is only necessary to carry out the connection of the single-phase AC power supply to the arms of the three-phase rectifier and also to the node provided in the DC-Link. Therefore, efficiency in applying the power conversion apparatus is increased in accordance with the method provided by the present application.

In accordance with a third manner of connecting to the single-phase AC power supply, the method comprises:
Step S90: providing a single-phase rectifier for receiving the power supplied by the single-phase AC power supply; and
Step S92: connecting all three arms of the three-phase rectifier to output of the single-phase rectifier.

Preferably, this manner of connection corresponds to the structure shown in Fig. 3. Therein, the connection of the power conversion apparatus in accordance with the method of the present application is achieved by connecting all three arms of the single-phase rectifier to the output, or the current supply end of the single-phase rectifier. As to a detailed description of the current supply end of the single-phase rectifier, reference is made to the description in relation to Fig. 3 in the above. More specifically, the connection in this case to the three-phase AC power supply is carried out, as described in the above, by connecting the three phase wires of the three-phase AC power supply to the respective arms of the three-phase rectifier, such that in the case of connecting to the single-phase AC power supply, it is only necessary to further connect the current supply end or the output of the single-phase rectifier to all of the three connections that were previously used to connect the three phase wires of the three-phase AC power supply to the three arms of the three-phase rectifier. Further, the current return end of the single-phase rectifier is preferably connected in accordance with the method to the current return end of the three-phase rectifier.

Of course, the single-phase rectifier can be provided as an integral part of the power conversion apparatus, such that the connection of the single-phase rectifier to the three-phase rectifier as described in the above can be further controlled by switches, in that, for instance, the switches are opened in case of connecting to the three-phase power supply and are closed in order for connecting to the single-phase power supply through the single-phase rectifier. In this case, the three-phase rectifier is used to its full capacity also in the case for connecting to the single-phase AC power supply, wherein for connecting to the single-phase power supply it is only necessary to provide the single-phase rectifier which can be provided as an integral part of the power conversion apparatus or can be configured to be added to the power conversion apparatus at the time of connecting to the single-phase AC power supply. The manufacturing of the power conversion apparatus has thus not changed in that only one power conversion apparatus with the structure as described in the above needs to be manufactured, such that at the stage of connecting to the two kinds of AC power supplies, the manufactured power conversion apparatus can in both cases be easily applied with the integral or later added front end in the form of the single-phase rectifier and/or additional switches in order to control the connection to either the three-phase AC power supply or the single-phase AC power supply.

It is thus concluded that in accordance with the present application, there is provided a power conversion apparatus with compatibility with both a three-phase AC power supply and a single-phase AC power supply with the minimum amount of components needed in the power conversion apparatus, wherein in the manufacturing process there is needed only one kind of power conversion apparatus to be manufactured, in that at the connection stage, the connection to both the three-phase AC power supply and the single-phase AC power supply can be carried out by either connecting the respective arms of the three-phase rectifier (including connecting to a node provided between two capacitors comprised in the DC-Link when necessary), or by making use of the front end in the form of the single-phase rectifier (which is provided as an integral part of the power conversion apparatus or can be added at the time of connection to the single-phase AC power supply).

With such a configuration of the power conversion apparatus, as well as a method for connecting such a power conversion apparatus to the two kinds of power supplies, the amount of components needed in the power conversion apparatus is reduced to the smallest, and there is no need in adapting the structure of the power conversion apparatus to have the compatibility with the two kinds of AC power supplies, wherein the complexity of the connection is also reduced, such that efficiency in manufacturing and applying the power conversion apparatus in accordance with the present application is improved.

## Claims

1. Power conversion apparatus for converting power supplied by an AC power supply and providing the converted power to a heat pump, comprising: a three-phase rectifier, a DC-Link and an inverter, wherein:
the three-phase rectifier is configured to receive the supplied power, and convert the received power to DC power,
the DC-Link is configured to receive the converted DC power, and filter the received DC power,
the inverter is configured to receive the filtered DC power, and convert the received DC power to AC power to be provided to the heat pump, and
the power conversion apparatus is configured to be suitable for being connected to a three-phase AC power supply comprising three phase wires, and also suitable for being connected to a single-phase AC power supply comprising a phase wire and a neutral wire.

2. The power conversion apparatus according to claim 1, wherein:
the three-phase rectifier comprises three arms, and
the three arms of the three-phase rectifier are configured to connect to the three phase wires of the three-phase AC power supply, respectively.

3. The power conversion apparatus according to claim 1 or 2, wherein:
a first arm of three arms of the three-phase rectifier is configured to connect to the phase wire of the single-phase AC power supply, and
a second arm of the three arms of the three-phase rectifier is configured to connect to the neutral wire of the single-phase AC power supply.

4. The power conversion apparatus according to any one of claims 1 to 3, wherein:
all three arms of the three-phase rectifier are configured to connect to the phase wire of the single-phase AC power supply,
the DC-Link comprises two capacitors connected in series, and
a node between the two capacitors is configured to connect to the neutral wire of the single-phase AC power supply.

5. The power conversion apparatus according to any one of claims 1 to 4, wherein:
for each wire of the three-phase AC power supply and/or the single-phase AC power supply, an inductor is configured in said each wire.

6. The power conversion apparatus according to any one of claims 1 to 5, wherein:
the power conversion apparatus further comprises a single-phase rectifier configured to receive power supplied by the single-phase AC power supply, and
all three arms of the three-phase rectifier are configured to connect to output of the single-phase rectifier.

7. The power conversion system of claim 6, wherein:
for each connection between the respective arm of the three-phase rectifier and the output of the single-phase rectifier, an inductor is configured in said each connection.

8. Method for connecting a power conversion apparatus in accordance with claim 1 to an AC power supply, so as to convert power supplied by the AC power supply and provide the converted power to a heat pump, wherein the AC power supply can be either a three-phase AC power supply comprising three phase wires, or a single-phase AC power supply comprising a phase wire and a neutral wire, wherein the method comprises:
for the three-phase AC power supply, connecting the power conversion apparatus to the three-phase AC power supply by connecting arms of the three-phase rectifier to the three phase wires of the three-phase AC power supply, and
for the single-phase AC power supply, connecting the power conversion apparatus to the single-phase AC power supply also by connecting arms of the three-phase rectifier to the phase wire and the neutral wire of the single-phase AC power supply.

9. The method according to claim 8, wherein the method further comprises:
connectingthree arms of the three-phase rectifier to the three phase wires of the three-phase AC power supply, respectively.

10. The method according to claim 8 or 9, wherein the method further comprises:
connecting a first arm of the three arms of the three-phase rectifier to the phase wire of the single-phase AC power supply, and
connecting a second arm of the three arms of the three-phase rectifier to the neutral wire of the single-phase AC power supply.

11. The method according to any one of claims 8 to 10, wherein the method further comprises:
connecting all three arms of the three-phase rectifier to the phase wire of the single-phase AC power supply,
providing two capacitors connected in series in the DC-Link, and
connecting a node between the two capacitors to the neutral wire of the single-phase AC power supply.

12. The method according to any one of claims 8 to 11, wherein the method further comprises:
for each wire of the three-phase AC power supply and/or the single-phase AC power supply, providing an inductor in said each wire.

13. The method according to any one of claims 8 to 12, wherein the method further comprises:
providing a single-phase rectifier for receiving power supplied by the single-phase AC power supply,
connecting all three arms of the three-phase rectifier to output of the single-phase rectifier.

14. The method of claim 13, wherein the method further comprises:
for each connection between the respective arm of the three-phase rectifier and the output of the sing-phase rectifier, providing an inductor in said each connection.
